# EUROPEAN PATENT APPLICATION

(11) **EP 4 685 768 A1**
(43) Date of publication of application: **28.01.2026**
(21) Application number: 23928745.1
(22) Date of filing: 31.10.2023
(51) Int. Cl.: G08C 15/00, G01D 9/00

(54) **LOGGING DEVICE, LOGGING METHOD, AND PROGRAM**

(30) Priority: 20.03.2023 JP 2023043703
(71) Applicant: The Japan Steel Works, Ltd., Tokyo 141-0032 (JP)
(72) Inventor: TAKEMOTO Haruna, Tokyo 141-0032 (JP); FUKUSHI Yusuke, Tokyo 141-0032 (JP); OCHIIWA Takashi, Tokyo 141-0032 (JP)
(74) Representative: Simmons & Simmons LLP (Munich)
(86) International application number: PCT/JP2023/039205
(87) International publication number: WO 2024/195174

(57) **Abstract**

Provided is a logging device comprising: an acquisition unit that acquires at least one of measurement data, measured at each point in time within a specific period by a sensor provided at a specific location of a device to be monitored, or operation data, indicating the operating status of the device to be monitored; a recording unit that records, in a storage device, the data acquired by the acquisition unit; and a transmission unit that transmits the data recorded by the recording unit to an external device at a specific timing.

## Description

### Technical Field

The present disclosure relates to a logging apparatus, a logging method, and a program.

### Background Art

A technique for detecting an abnormality of an industrial machine or the like based on measurement data measured by a sensor is conventionally known (see, for example, Patent Literature 1).

### Citation List

### Patent Literature

Patent Literature 1: International Patent Publication No. WO 2020/170409

### Summary of Invention

### Technical Problem

However, in the related art, it is considered that, for example, measurement data measured by a sensor cannot be appropriately utilized.

An object of the present disclosure is to provide a technology by which it is possible to appropriately utilize data for monitoring an apparatus to be monitored.

### Solution to Problem

In a first aspect of the present disclosure, a logging apparatus including: an acquisition unit configured to acquire at least one of measurement data measured at each of points in time within a specified period of time by a sensor provided at a specific part of an apparatus to be monitored and operation data indicating an operation state of the apparatus to be monitored; a recording unit configured to record the data acquired by the acquisition unit in a storage apparatus; and a transmission unit configured to transmit the data recorded by the recording unit to an external apparatus at a specified timing is provided.

Further, in a second aspect of the present disclosure, a logging method, in which a logging apparatus: acquires at least one of measurement data measured at each of points in time within a specified period of time by a sensor provided at a specific part of an apparatus to be monitored and operation data indicating an operation state of the apparatus to be monitored; records the acquired data; and transmits the recorded data to an external apparatus at a specified timing, is provided.

Further, in a third aspect according to the present disclosure, a program for causing a computer to: acquire at least one of measurement data measured at each of points in time within a specified period of time by a sensor provided at a specific part of an apparatus to be monitored and operation data indicating an operation state of the apparatus to be monitored; record the acquired data; and transmit the recorded data to an external apparatus at a specified timing is provided.

### Advantageous Effects of Invention

According to the present disclosure, it is possible to appropriately utilize data for monitoring an apparatus to be monitored.

### Brief Description of Drawings

Fig. 1 is a diagram showing an example of a configuration of a logging system according to an embodiment;
Fig. 2 is a diagram for explaining a configuration of a logging apparatus according to the embodiment;
Fig. 3 is a diagram showing an example of a hardware configuration of the logging apparatus according to the embodiment;
Fig. 4 is a diagram showing an example of a hardware configuration of a computer of the logging apparatus according to the embodiment;
Fig. 5 is a flowchart showing an example of processes performed by the logging apparatus according to the embodiment; and
Fig. 6 is a flowchart showing an example of processes performed by the logging apparatus according to the embodiment when power supply from a commercial power supply is stopped.

### Description of Embodiments

The principle of the present disclosure will be described with reference to some illustrative embodiments. It should be understood that these embodiments are described for illustrative purposes only and will assist those skilled in the art in understanding and implementing the present disclosure without suggesting any limitations with regard to the scope of the present disclosure. The disclosure described herein may be implemented in a variety of ways other than those described below.

In the following description and claims, unless otherwise defined, the meanings of all technical and scientific terms used herein are the same as those generally understood by those skilled in the art to which the present disclosure pertains.

An embodiment of the present disclosure will be described hereinafter with reference to the drawings.

### <System configuration>

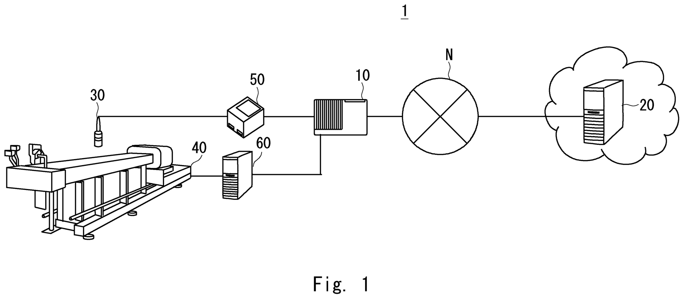

A configuration of a logging system 1 according to an embodiment will be described with reference to Fig. 1. Fig. 1 is a diagram showing an example of the configuration of the logging system 1 according to the embodiment. In the example shown in Fig. 1, the logging system 1 includes a logging apparatus 10, a cloud server 20, a sensor 30, an apparatus 40 to be monitored, a sensing apparatus 50, and a controller 60. Note that the number of the logging apparatuses 10, the number of the cloud servers 20, the number of the sensors 30, the number of the apparatuses 40 to be monitored, the number of the sensing apparatuses 50, and the number of the controllers 60 are not limited to those shown in the example of Fig. 1.

In the example shown in Fig. 1, the logging apparatus 10 and the cloud server 20 are connected to each other through a network N in such a way that they can communicate with each other. Examples of the network N may include, for example, the Internet, a mobile communication system, a wireless Local Area Network (LAN), and a LAN. Examples of the mobile communication system may include, for example, a fifth-generation mobile communication system (5G), a sixth-generation mobile communication system (6G, Beyond 5G), a fourth-generation mobile communication system (4G), and a third-generation mobile communication system (3G).

Further, in the example shown Fig. 1, the logging apparatus 10 and the sensing apparatus 50 are connected to each other by a cable such as a bus or a LAN, and the logging apparatus 10 and the controller 60 are connected to each other by a cable such as a bus or a LAN. The logging apparatus 10 records data about the apparatus 40 to be monitored, and uploads the recorded data to the cloud server 20.

The cloud server 20 may analyze an operation state, a deterioration state, and the like of the apparatus 40 to be monitored based on the data uploaded by the logging apparatus 10, and provide a result of the analysis to a user of the apparatus 40 to be monitored through a website.

The sensor 30 is a sensor which is installed in a specific part of the apparatus 40 to be monitored and performs measurement. The sensor 30 may measure, for example, the temperature, vibration (speed, distance, and acceleration), torque, strain, pressure, etc. The sensing apparatus 50, for example, performs analog-to-digital (A/D) conversion on a signal measured by the sensor 30 and outputs the converted signal to the logging apparatus 10.

The apparatus 40 to be monitored is an apparatus whose logs are to be acquired by the logging apparatus 10. The apparatus 40 to be monitored may be, for example, an industrial machine such as an extruder (a twin-screw extruder) which produces a film or a sheet by heating and melting resin and kneading the resin. Note that the extruder may include a speed reducer which converts power generated by a motor into a predetermined torque and transmits it to the twin screws. Further, the apparatus 40 to be monitored may be, for example, an extruder or a granulator for producing pellets which are raw materials for resin materials. Further, the apparatus 40 to be monitored may be an injection molding machine which pours raw materials melted by heat or the like into a mold and molds them. The controller 60 controls an operation and the like of the apparatus 40 to be monitored. The controller 60 outputs operation data indicating the operation state of the apparatus 40 to be monitored to the logging apparatus 10.

### <Configuration of the logging apparatus 10>

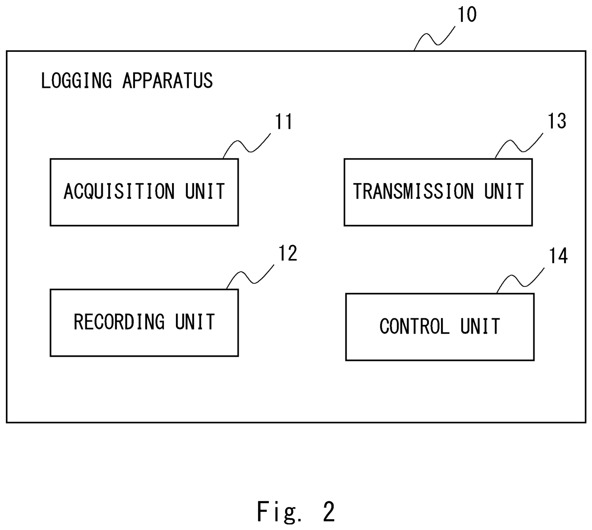

Next, a configuration of the logging apparatus 10 according to the embodiment will be described with reference to Fig. 2. Fig. 2 is a diagram showing an example of the configuration of the logging apparatus 10 according to the embodiment. In the example shown in Fig. 2, the logging apparatus 10 includes an acquisition unit 11, a recording unit 12, a transmission unit 13, and a control unit 14. Note that the acquisition unit 11, the recording unit 12, and the transmission unit 13 may be implemented by a computer 100 described later. Further, the control unit 14 may be implemented by a power management board 111 described later.

The acquisition unit 11 acquires at least one of measurement data measured by the sensor 30 provided in a specific part of the apparatus 40 to be monitored at each point in time within a specified period of time, and operation data indicating an operation state of the apparatus to be monitored. The recording unit 12 records the data acquired by the acquisition unit 11 in a storage apparatus provided inside or outside the logging apparatus 10. The transmission unit 13 transmits the data recorded by the recording unit 12 to the cloud server 20 (an example of an "external apparatus") at a specified timing.

When, for example, the control unit 14 detects an interruption of a commercial power supply, the control unit 14 stops the computer 100 of the logging apparatus 10 (e.g., shuts down the computer 100 or causes the computer 100 to sleep) by using electric power from a battery. Note that the shutdown of the computer 100 may be, for example, a process of turning off the power of the computer 100 after safely terminating software that is running in the operating system of the computer 100 so that no problem occurs. Further, the sleep of the computer 100 may be, for example, a process of turning off the power of the computer 100 while partially maintaining the operation of the system so as to speed up the next startup.

### <Hardware configuration of the logging apparatus 10>

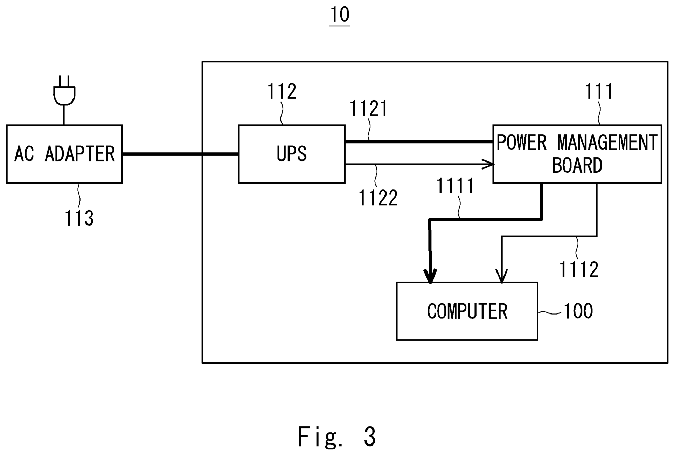

Next, the configuration of the logging apparatus 10 according to the embodiment will be described with reference to Fig. 3. Fig. 3 is a diagram showing an example of a hardware configuration of the logging apparatus 10 according to the embodiment. In the example shown in Fig. 3, the logging apparatus 10 includes the computer 100, the power management board 111, an Uninterruptible Power Supply (UPS) 112, and an AC adapter 113.

The UPS 112 and the power management board 111 are connected to each other by a power supply cable 1121 and a signal cable 1122. Further, the power management board 111 and the computer 100 are connected by a power supply cable 1111 and a signal cable 1112. The signal cable 1112 may be, for example, a LAN cable or an analog cable. The power supply cable 1111 and the signal cable 1112 may be implemented, for example, by a single LAN cable usable for Power over Ethernet (PoE).

The AC adapter 113 converts an alternating current of a commercial power supply supplied from an electric power company into a direct current or the like, and supplies it to the UPS 112 or the like of the logging apparatus 10. The UPS 112 stores electric power from the AC adapter 113 in a battery. Note that the battery may be any apparatus that can be repeatedly charged and discharged, and examples of this battery may include, for example, a supercapacitor and a lithium-ion battery. Further, when the commercial power supply is not interrupted, the UPS 112 supplies the electric power from the AC adapter 113 to the power management board 111 through the power supply cable 1121. Further, when the commercial power supply is interrupted, the UPS 112 supplies the electric power from the battery to the power management board 111 through the power supply cable 1121. Further, when the UPS 112 detects that the commercial power supply is interrupted, the UPS 112 transmits a signal (a power failure detection signal) indicating that it detects that the commercial power supply is interrupted to the power management board 111 through the signal cable 1122. Further, when the UPS 112 detects that the commercial power supply is restored (is not interrupted), the UPS 112 transmits a signal (a restoration detection signal) indicating that the commercial power supply is restored to the power management board 111 through the signal cable 1122.

The power management board 111 may be implemented by, for example, an Application Specific Integrated Circuit (ASIC). The power management board 111 supplies the electric power from the UPS 112 to the computer 100 through the power supply cable 1111. Further, the power management board 111 transmits a command for controlling the stop and the startup of the computer 100 to the computer 100 through the signal cable 1112 in accordance with whether or not an interruption of the commercial power supply has occurred. Note that the command may be transmitted by means of an analog signal or a digital signal.

### <Hardware configuration of the computer 100>

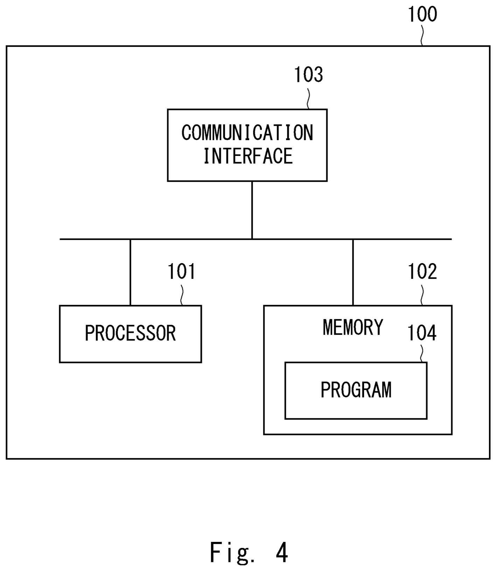

Fig. 4 is a diagram showing an example of a hardware configuration of the computer 100 of the logging apparatus 10 according to the embodiment. In the example shown in Fig. 4, the computer 100 includes a processor 101, a memory 102, and a communication interface 103. These components may be connected to each other by a bus or the like. The memory 102 stores at least a part of a program 104. The communication interface 103 includes interfaces required for communication with other network elements.

When the program 104 is executed by the processor 101, the memory 102, and the like in cooperation with each other, at least some of the processes in the embodiments of the present disclosure are performed by the computer 100. The memory 102 may be of any type suitable for a local technical network. The memory 102 may, as a non-limiting example, be a non-transitory computer readable storage medium. Further, the memory 102 may be implemented using any suitable data storage technology, such as a semiconductor-based memory device, a magnetic memory device and system, an optical memory device and system, a fixed memory, and a removable memory. Although only one memory 102 is shown in the computer 100, the computer 100 may include several memory modules that are physically different from each other. The processor 101 may be of any type. The processor 101 may include one or more of a general-purpose computer, a dedicated computer, a microprocessor, a Digital Signal Processor (DSP), and a processor based on a multi-core processor architecture as a non-limiting example. The computer 100 may include a plurality of processors, such as an application-specific integrated circuit chip that is temporally dependent on a clock that synchronizes the main processor.

The embodiments of the present disclosure may be implemented in hardware or a dedicated circuit, software, logic, or any combination thereof. Some aspects may be implemented in hardware, while other aspects may be implemented in firmware or software that may be executed by a controller, a microprocessor, or other computing devices.

The present disclosure also provides at least one computer program product that is tangibly stored in a non-transitory computer readable storage medium. The computer program product includes computer executable instructions, such as instructions included in program modules, and is executed on a device on a target real or virtual processor to perform the processes or the method according to the present disclosure. The program modules include routines, programs, libraries, objects, classes, components, data structures, and the like that perform specific tasks or implement specific abstract data types. The functions of the program modules may be combined or divided among the program modules as desired in various embodiments. Machine executable instructions for the program modules can be executed in a local or a distributed device. In a distributed device, program modules can be located in both local and remote storage media.

Program codes for performing the method according to the present disclosure may be written in any combination of one or more programming languages. These program codes are provided to a processor or a controller of a general-purpose computer, a dedicated computer, or other programmable data processing apparatuses. When the program codes are executed by the processor or the controller, functions/operations in the flowchart and/or a block diagram to be implemented are executed. The program codes are executed entirely on a machine, partly on a machine, as a stand-alone software package, partly on a machine, partly on a remote machine, or entirely on a remote machine or a server.

The program can be stored and provided to a computer using any type of non-transitory computer readable media. Non-transitory computer readable media include any type of tangible storage media. Examples of non-transitory computer readable media include magnetic storage media, optical magnetic storage media, optical disc media, semiconductor memories, and the like. Magnetic storage media include, for example, flexible disks, magnetic tapes, hard disk drives, and the like. Optical magnetic storage media include, for example, magneto-optical disks and the like. Optical disk media include, for example, a Blu-ray disc, a Compact Disc (CD)-Read Only Memory (ROM), a CD-Recordable (R), a CD-ReWritable (RW), and the like. Semiconductor memories include, for example, a solid state drive, a mask ROM, a Programmable ROM (PROM), an Erasable PROM (EPROM), a flash ROM, a random access memory (RAM), and the like. The program may also be provided to a computer using any type of transitory computer readable media. Examples of transitory computer readable media include electric signals, optical signals, and electromagnetic waves. Transitory computer readable media can provide the program to a computer via a wired communication line (e.g., electric wires and optical fibers) or a wireless communication line.

### <Processing>

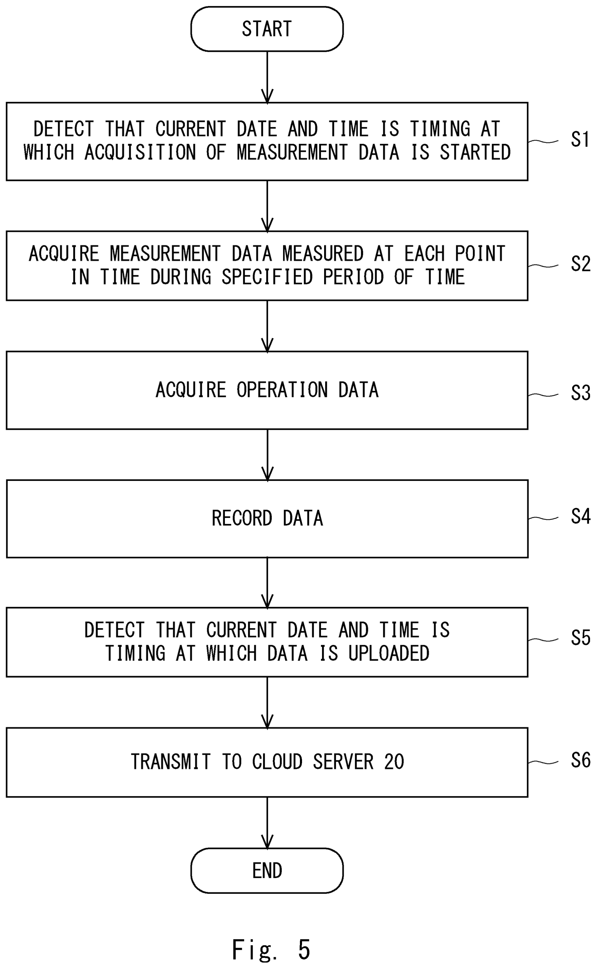

Next, an example of processes performed by the logging apparatus 10 according to the embodiment will be described with reference to Fig. 5. Fig. 5 is a flowchart showing the example of processes performed by the logging apparatus 10 according to the embodiment. Note that the order of the following processes may be changed as appropriate, as long as no contradiction arises. Further, the following processes may be executed in parallel as appropriate, as long as no contradiction arises.

In Step S1, the acquisition unit 11 detects that the current date and time is a timing (a specified timing, e.g., every three hours) at which acquisition of measurement data is started. The timing at which acquisition of measurement data is started, for example, may be specified in advance by a user of the logging apparatus 10. In this case, the logging apparatus 10 may receive information indicating the timing specified by a user from the cloud server 20 or may record the information in response to an operation performed by a user in the logging apparatus 10. Further, for example, the cloud server 20 may specify the timing at which acquisition of measurement data is started. In this case, the cloud server 20 may determine an interval at which measurement data is acquired in accordance with, for example, the degree of deterioration or the like of the apparatus 40 to be monitored, which is analyzed based on the measurement data. In this case, for example, the cloud server 20 may determine the interval at which measurement data is acquired so that it becomes shorter as the degree of deterioration of the apparatus 40 to be monitored increases. By doing so, for example, it can be more quickly detected that maintenance of the apparatus 40 to be monitored is required.

Next, the acquisition unit 11 acquires measurement data measured by the sensor 30 at each point in time during a specified period of time (e.g., one minute) (Step S2). Here, the acquisition unit 11 may, for example, acquire measurement data at a specified sampling frequency (e.g., 2 kHz) during a specified period of time. Note that the measurement data measured at each point in time within a specified period of time may be time-series data used to perform at least one of frequency analysis, statistical analysis, and information analysis. In this case, the measurement data may include, for example, data indicating at least one of the temperature, vibration (speed, distance, and acceleration), torque, strain, and pressure of the apparatus 40 to be monitored.

Next, the acquisition unit 11 acquires operation data indicating an operation state of the apparatus 40 to be monitored (Step S3). Note that the operation data may include data about the control of the apparatus 40 to be monitored, such as data indicating the rotation speeds of the screws of the apparatus 40 to be monitored, a log of errors that have occurred in the apparatus 40 to be monitored, and the like. Here, the acquisition unit 11 may acquire (receive) the operation data from the controller 60 that controls the operation of the apparatus 40 to be monitored when, for example, the operation state of the apparatus 40 to be monitored has changed. Note that the process of Step S2 and the process of Step S3 may be executed in parallel or in reverse order.

Next, the recording unit 12 records the data acquired by the acquisition unit 11 (Step S4). Here, the recording unit 12 may record the measurement data in a storage apparatus such as a Solid State Drive (SSD) included in an A/D (analog-to-digital) conversion apparatus provided between the logging apparatus 10 and the sensor 30. Further, the recording unit 12 may record the operation data in the storage apparatus such as an SSD included in the logging apparatus 10.

Next, the transmission unit 13 detects that the current date and time is a timing (a specified timing, e.g., every 24 hours) at which the data is uploaded (Step S5). The timing at which the data is uploaded, for example, may be specified in advance by a user of the logging apparatus 10. In this case, the logging apparatus 10 may receive information indicating the timing specified by a user from the cloud server 20 and record it. In this case, the cloud server 20 may determine an interval at which the data is uploaded in accordance with, for example, the degree of deterioration or the like of the apparatus 40 to be monitored, which is analyzed based on the data. By doing so, for example, it can be more quickly detected that maintenance of the apparatus 40 to be monitored is required. Further, the logging apparatus 10 may record information indicating the timing specified by a user in response to an operation of an operation unit or the like of the logging apparatus 10.

Next, the transmission unit 13 transmits (uploads) the data recorded by the recording unit 12 to the cloud server 20 (Step S6). By doing so, the cloud server 20 can provide information necessary for operation analysis using Artificial Intelligence (AI) or maintenance of the apparatus 40 to be monitored to a user through a website or the like.

### <<Processes when power supply from a commercial power supply is stopped>>

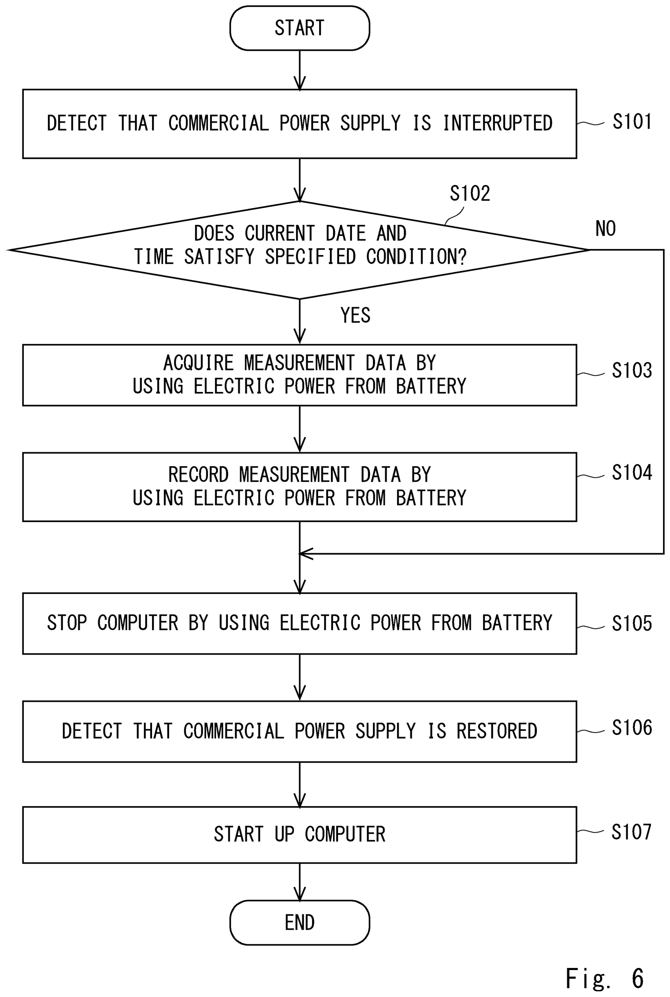

Next, an example of processes performed by the logging apparatus 10 according to the embodiment when power supply from a commercial power supply is stopped will be described with reference to Fig. 6. Fig. 6 is a flowchart showing the example of processes performed by the logging apparatus 10 according to the embodiment when power supply from a commercial power supply is stopped. Note that the order of the following processes may be changed as appropriate, as long as no contradiction arises.

The control unit 14 detects that a commercial power supply is interrupted (power supply from the commercial power supply is stopped) (Step S101). Here, the control unit 14 may determine that the commercial power supply is interrupted when the control unit 14 receives a power failure detection signal from the UPS 112.

Next, the control unit 14 determines whether or not the current date and time satisfies a specified condition (Step S102). Here, the control unit 14 may determine that the specified condition is satisfied when, for example, the current date and time is within a period of time during which measurement data is acquired by the acquisition unit 11. In this case, the control unit 14 may determine that the specified condition is satisfied when the current date and time is the date and time between the point in time at which acquisition of the measurement data is started and the point in time at which acquisition of the measurement data is ended.

Further, the control unit 14 may determine that the specified condition is satisfied when, for example, the point in time from the current date and time to the point in time at which acquisition of the measurement data is started is within a specified period of time (e.g., one minute). Note that the control unit 14 may determine the specified period of time based on the charging state of the battery of the UPS 112. In this case, the control unit 14 may determine the specified period of time so that, for example, it becomes longer as the charging state of the battery of the UPS 112 is closer to a fully charged state.

When the current date and time does not satisfy the specified condition (NO in Step S102), the process proceeds to Step S105. On the other hand, when the current date and time satisfies the specified condition (YES in Step S102), the control unit 14 causes the acquisition unit 11 to acquire the measurement data by using electric power from the battery of the UPS 112 (Step S103). By doing so, even when, for example, an interruption has occurred during the process of acquiring measurement data, measurement data, which is a set of time-series data to be acquired at this stage, can be acquired. Therefore, even when, for example, measurement data is time-series data to be used to perform frequency analysis, it is possible to avoid wasting pieces of the time-series data that have already been acquired.

Next, the control unit 14 causes the recording unit 12 to record the measurement data by using the electric power from the battery of the UPS 112 (Step S104). Next, the control unit 14 stops the computer 100 of the logging apparatus 10 (e.g., shuts down the computer 100 or causes the computer 100 to sleep) by using the electric power from the battery of the UPS 112 (Step S105). Here, the control unit 14 may transmit, for example, a command for stopping the computer 100 to the computer 100 using a digital signal or an analog signal.

Next, the control unit 14 detects that the commercial power supply is restored (power supply from the commercial power supply is resumed) (Step S106). Here, the control unit 14 may determine that the commercial power supply is restored when a restoration detection signal is received from the UPS 112.

Next, the control unit 14 starts up the computer 100 of the logging apparatus 10 by using electric power from the commercial power supply (Step S107), and ends the process. Here, the control unit 14 may start up the computer 100, for example, by a method such as Wake On LAN.

The control unit 14 may, for example, start up the computer 100 of the logging apparatus 10 when the charging level of the battery of the UPS 112 reaches a threshold or greater after the commercial power supply is restored. By doing so, the control unit 14 can appropriately stop the computer 100 even when, for example, an interruption has occurred again immediately after the control unit 14 starts up the computer 100.

### (Abnormality notification function of the logging apparatus 10)

The transmission unit 13 may transmit a notification to a specified contact when an abnormality has occurred in the logging apparatus 10. By doing so, for example, a user can recognize an abnormality of the logging apparatus 10. In this case, the transmission unit 13 may transmit a notification to a specified contact when, for example, an abnormality has occurred in the recording of data performed by the recording unit 12. Further, the transmission unit 13 may transmit a notification to a specified contact when, for example, an abnormality has occurred in the uploading of data to the cloud server 20.

In this case, the transmission unit 13 may report the abnormality by means of, for example, a speaker, a lamp, or a display of the logging apparatus 10. Further, the transmission unit 13 may, for example, transmit a notification to a specified email address. Further, the transmission unit 13 may, for example, transmit a notification to the cloud server 20 to notify a user about the abnormality through a website of the cloud server 20.

### (Regarding deletion of logs recorded by the recording unit 12 of the logging apparatus 10)

In the processes of Step S4 in Fig. 5 and Step S104 in Fig. 6, the recording unit 12 may erase data that does not match a specified condition from among pieces of data for which a first period of time (e.g., 30 days) has elapsed after the pieces of data were recorded in a plurality of respective periods of time. In this case, the recording unit 12 may hold the data that matches a specified condition without deleting it even after a specified period of time has elapsed since the data was recorded. By doing so, for example, since specified data is held in the logging apparatus 10, maintenance personnel or the like can acquire the specified data from the logging apparatus 10.

In this case, the recording unit 12 may, for example, determine each of data indicating an error state of the apparatus 40 to be monitored, data indicating that the apparatus 40 to be monitored has performed a specified operation, and data of a specified type as data that matches the specified condition. The specified type may be specified, for example, by a user through the cloud server 20.

### <Modified example>

The control unit 14 may be implemented by the power management board 111. However, the logging apparatus 10 according to the present disclosure is not limited thereto. At least some of the processes performed by the control unit 14 may be implemented by, for example, the computer 100.

Further, the logging apparatus 10 may be an apparatus included in one housing. However, the logging apparatus 10 according to the present disclosure is not limited thereto. Each of the components (e.g., the recording unit 12 and the control unit 14) of the logging apparatus 10 may be implemented by, for example, cloud computing composed of one or more computers. The logging apparatus 10 described above is also included in an example of the "logging apparatus" according to the present disclosure.

Note that the present disclosure is not limited to the above-described embodiments and may be changed as appropriate without departing from the spirit of the present disclosure.

This application is based upon and claims the benefit of priority from Japanese patent application No. 2023-043703, filed on March 20, 2023, the disclosure of which is incorporated herein in its entirety by reference.

### Reference Signs List

- 1: LOGGING SYSTEM
- 10: LOGGING APPARATUS
- 11: ACQUISITION UNIT
- 12: RECORDING UNIT
- 13: TRANSMISSION UNIT
- 14: CONTROL UNIT
- 20: CLOUD SERVER
- 30: SENSOR
- 40: APPARATUS TO BE MONITORED
- 100: COMPUTER
- 101: PROCESSOR
- 102: MEMORY
- 103: COMMUNICATION INTERFACE
- 104: PROGRAM
- 111: POWER MANAGEMENT BOARD
- 113: AC ADAPTER
- 1111: POWER SUPPLY CABLE
- 1112: SIGNAL CABLE
- 1121: POWER SUPPLY CABLE
- 1122: SIGNAL CABLE

## Claims

1. A logging apparatus comprising:
an acquisition unit configured to acquire at least one of measurement data measured at each of points in time within a specified period of time by a sensor provided at a specific part of an apparatus to be monitored and operation data indicating an operation state of the apparatus to be monitored;
a recording unit configured to record the data acquired by the acquisition unit in a storage apparatus; and
a transmission unit configured to transmit the data recorded by the recording unit to an external apparatus at a specified timing.

2. The logging apparatus according to claim 1, comprising a control unit configured to stop a computer of the logging apparatus by using electric power from a battery when the control unit detects an interruption of a commercial power supply.

3. The logging apparatus according to claim 2, wherein when the control unit detects an interruption of the commercial power supply within the specified period of time, the control unit causes the acquisition unit to acquire data by using the electric power from the battery, causes the recording unit to record the data by using the electric power from the battery, and then stops the computer of the logging apparatus.

4. The logging apparatus according to claim 3, wherein when the control unit detects an interruption of the commercial power supply within the specified period of time and a point in time at which the specified period of time is started is within a specified period of time from a present time, the control unit causes the acquisition unit to acquire data by using the electric power from the battery, causes the recording unit to record the data by using the electric power from the battery, and then stops the computer of the logging apparatus.

5. The logging apparatus according to claim 3 or 4, wherein the control unit starts up the computer of the logging apparatus when the commercial power supply is restored after the interruption thereof.

6. The logging apparatus according to claim 3, wherein the measurement data measured at each of the points in time within the specified period of time is time series data used to perform at least one of frequency analysis, statistical analysis, and information analysis.

7. The logging apparatus according to claim 1, wherein the apparatus to be monitored comprises at least one of an extruder or a granulator configured to produce a film or a sheet by heating and melting resin and kneading the resin, an extruder configured to produce a pellet which is a raw material for a resin material, and an injection molding machine configured to pour a melted raw material into a mold and mold the melted raw material.

8. The logging apparatus according to claim 1 or 2, wherein the external apparatus is a server on a cloud.

9. The logging apparatus according to claim 1, wherein the specified timing is a timing indicated by at least one of the external apparatus and a user.

10. The logging apparatus according to claim 1, wherein the transmission unit transmits a notification to a specified contact in at least one of a case where an abnormality has occurred in recording of data by the recording unit and a case where an abnormality has occurred in transmission of the data to the external apparatus.

11. The logging apparatus according to claim 1, wherein the recording unit erases measurement data which does not match a specified condition from among pieces of measurement data for which a first period of time has elapsed after the pieces of measurement data were recorded in a plurality of respective periods of time.

12. A logging method, wherein a logging apparatus:
acquires at least one of measurement data measured at each of points in time within a specified period of time by a sensor provided at a specific part of an apparatus to be monitored and operation data indicating an operation state of the apparatus to be monitored;
records the acquired data; and
transmits the recorded data to an external apparatus at a specified timing.

13. A program for causing a computer to:
acquire at least one of measurement data measured at each of points in time within a specified period of time by a sensor provided at a specific part of an apparatus to be monitored and operation data indicating an operation state of the apparatus to be monitored;
record the acquired data; and
transmit the recorded data to an external apparatus at a specified timing.
